**Europäisches Patentamt**

**European Patent Office**

**Office européen des brevets**

(19)

(11) Publication number: **0 005 077**
**B1**

(12)
# EUROPEAN PATENT SPECIFICATION

(45) Date of publication of patent specification: **03.02.82**

(21) Application number: **79300694.1**

(22) Date of filing: **25.04.79**

(51) Int. Cl.³: **B 29 D 7/02, B 29 F 3/00, B 29 H 3/00**

(54) Extrusion apparatus and method of use thereof.

(30) Priority: **26.04.78 US 899910**

(43) Date of publication of application:
**31.10.79 Bulletin 79/22**

(45) Publication of the grant of the European patent:
**03.02.82 Bulletin 82/5**

(84) Designated Contracting States:
**BE DE FR GB IT SE**

(56) References cited:
**CH - B - 401 453**
**FR - A - 1 251 365**
**US - A - 3 142 091**
**US - A - 3 869 304**
**US - A - 3 871 810**

(73) Proprietor: **UNIROYAL LTD.**
**895 Don Mills Road**
**Ontario M3C 1W3 (CA)**

(72) Inventor: **Giesbrecht, George Gerhardt**
**46 Buttonwood Drive**
**Kitchener Ontario (CA)**

(74) Representative: **Geldard, David Guthrie et al,**
**URQUHART-DYKES AND LORD 11th Floor, Tower House Merrion Way**
**Leeds, LS2 8PB West Yorkshire (GB)**

Courier Press, Leamington Spa, England.

Extrusion apparatus and method of use thereof

This invention relates to extrusion apparatus and the method of use thereof.

Extruders are normally used for the production of continuous strips having substantially constant cross-section. The material to be formed or "extrudate" is fed into the extruder, brought to a fluid or semi-fluid condition by heat, mechanical agitation or a combination of heat and mechanical agitation and forced out through an orifice having a shape generally corresponding to the cross-section desired in the finished strip.

One type of extrusion apparatus is the single roller die extruder, which includes a generally cylindrical roller and a stationary die head. The die head has a surface which confronts an arcuate portion of the cylindrical surface of the roller and cooperates with the roller to define an extrudate chamber. Means are provided for introducing an extrudate into this extrudate chamber. The roller is rotated about its axis to force the extrudate in a downstream direction towards a extrudate shaping orifice defined by a downstream portion of the confronting surface of the die head and the surface of the roller itself.

The direction downstream, as used in this disclosure, should be understood to mean the direction towards which the surface of the roller moves in its rotation, while the term upstream should be understood to mean the opposite direction. The terms axial and axially will also be used in this disclosure and should be understood as referring to the axis of rotation of the roller.

As can be appreciated, the thickness of the strip issuing from a single roller die extruder is controlled, at least in part, by the clearance between the stationary die head and the roller at the extrudate shaping orifice.

In the single roller die extruders of the prior art, such as those set forth in United States Patents 3,871,810 and 3,869,304, the roller is positioned by the frame of the apparatus in proximity to the stationary die head so that the clearance between the surface of the die head which forms part of extrudate shaping orifice and the roller will yield the desired strip thickness and shape.

Although such apparatus is capable of producing satisfactory strips, it is difficult to accurately control the thickness of the finished strip produced by such apparatus. The material in the extrudate chamber between the roller and the die head is under substantial pressure. Although the exact pressure in the chamber is unknown, it is believed to be about 176,000 kg per square meter at the point immediately upstream from the orifice. In an extruder of typical size, this extrudate pressure acting on the roller and die head creates a force of the order of 1361 kg tending to deflect the apparatus frame and move the roller away from the die head, despite the fact that the axis of the roller is fixed in relation to the die head. This movement of the roller makes it difficult to accurately maintain the clearance between the roller and the die head, and therefore makes it difficult to control the thickness of the finished strip issuing from the extruder. Thickness of the strip is largely determined by selection of a die blade mounted on the die head confronting the roller, the die slide incorporating low-friction bearing members in contact with the roller surface. Those members play no part in determining the roller location relative to the die head.

United States Patent No. 3,142,091 shows that the roller of a single roller die extruder can be biased towards the die head to hold the roller in position against the forces arising during extrusion, a stop being provided to limit the maximum movement of the roller towards the die head.

The invention is concerned with extrusion apparatus comprising a generally cylindrical roller; a stationary die head having a surface confronting said roller over a portion of the arcuate surface thereof to define a chamber between said die head and said roller; means for supplying an extrudate in a fluid condition to said chamber; means for rotating said roller about its axis to force said extrudate in a downstream direction through said chamber so that at least the extrudate in a downstream portion of said chamber is under pressure, a downstream portion of said confronting surface of said die head cooperating with the surface of said roller to define an extrudate shaping orifice at the downstream end of said chamber; and means for biasing said roller towards said die head. The improvement according to the invention lies in providing a bearing pad interposed between said roller and said die head, said bearing pad spacing said roller from said die head and accepting the reaction forces between said roller.

The invention also concerns extruding a strip of extrudate, including the steps of feeding the extrudate in fluid condition into a chamber defined by the arcuate surface of a generally cylindrical roller and a confronting surface of a die head; moving the extrudate in a downstream direction through the chamber to force the extrudate through an extrudate shaping orifice defined by the roller and a portion of the confronting surface of the die head at the downstream end of the chamber, and, during such movement, biasing the roller towards the die head. In such method the movement consists in that the roller is rotated about its axis to carry the extrudate in the downstream direction, reaction forces resulting from the biasing of the roller towards the die head are

2

accepted by bearing pads interposed between the roller and the die head and axially spaced from one another, the pads defining axially spaced lateral boundaries of at least a portion of the chamber, and the extrudate is axially confined in said portion of the chamber by means of the bearing pads.

By biasing the roller towards the die head and accepting the reaction forces between the roller and the die head by one or more bearing pads determining the spacing between the roller and the die head it is possible to overcome the effects of the chamber pressure and hold the roller and die head in constant relative position during extrusion, so leading to better control of the thickness of the extruded strip.

The or each bearing pad may be secured, desirably releasably, to the die head and the pad then has a bearing surface in contact with the roller surface. Alternatively the or each pad may be secured, again desirably releasably, to the roller and the pad then has a bearing surface in contact with the die head. Desirably at least two axially spaced similar bearing pads are provided.

A better understanding of the invention will be gained from the following description of preferred embodiments thereof, given in conjunction with the accompanying drawings in which:—

Figure 1 is a schematic perspective view of an extrusion apparatus in accordance with one embodiment of the present invention;

Figure 2 is a fragmentary, elevational view of the apparatus shown in Figure 1;

Figure 3 is a fragmentary, sectional view of the apparatus shown in Figures 1 and 2, taken along lines 3—3 in Figure 2;

Figure 4 is a fragmentary, sectional view of the apparatus shown in Figures 1—3, taken along line 4—4 in Figure 1;

Figure 5 is an exploded view showing a portion of the die head of the apparatus shown in Figures 1—4;

Figure 6 is a fragmentary sectional view of a portion of the apparatus shown in Figures 1—5, taken along line 6—6 in Figure 2.

Figure 7 is a fragmentary, sectional view similar to Figure 3 but showing an alternate embodiment of the present invention.

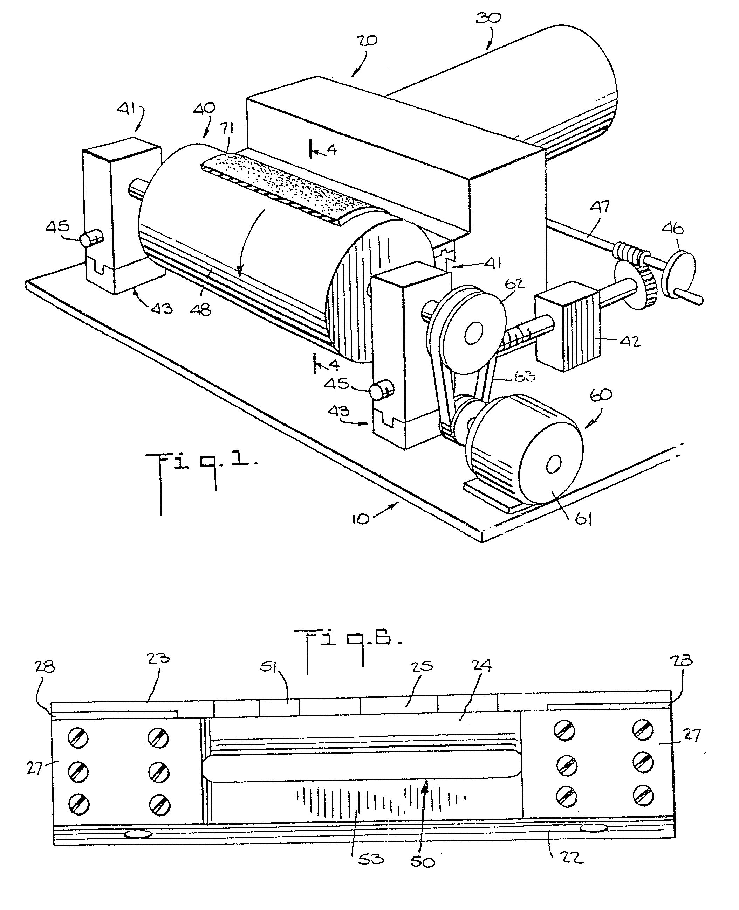

In the drawings, in which like reference numerals are used to denote like features in the different views, an extrusion apparatus according to a preferred embodiment of the present invention is shown in Figures 1 through 6.

The major components of the apparatus, as shown in Figure 1, include a frame 10, a die head 20 affixed to the frame and extrudate supply means 30. A roller 40 is rotatably mounted on bearing blocks 41 which are slidably mounted to frame 10 by means of ways 43.

Roller 40 is rotatable about its axis in the direction indicated by the arrow in Figure 1 by a drive means indicated generally at 60.

Preferably drive means 60 includes a variable speed D.C. motor 61, planetary speed reducer 62, and a belt drive 63 linking the motor to the speed reducer.

A means for biasing roller 40 towards die head 20 is provided in the form of a pair of jackscrews 45 threadedly engaging bearing blocks 41 and rotatably mounted to brackets 42, of which only one is visible in Figure 1. Brackets 42 are affixed to frame 10. Therefore, rotation of the jackscrews 45 will force bearing blocks 41, and hence roller 40, towards die head 20.

A handwheel 46 is linked to a shaft 47 which is arranged so that it may be linked to either one of the jackscrews 45 or to both of them at once through worm gear sets associated with the jackscrews. Thus, each jackscrew may be rotated independently to align the axis of the roller 40 with the die head 20, and then both jackscrews may be rotated simultaneously to force both ends of the roller evenly against the die head.

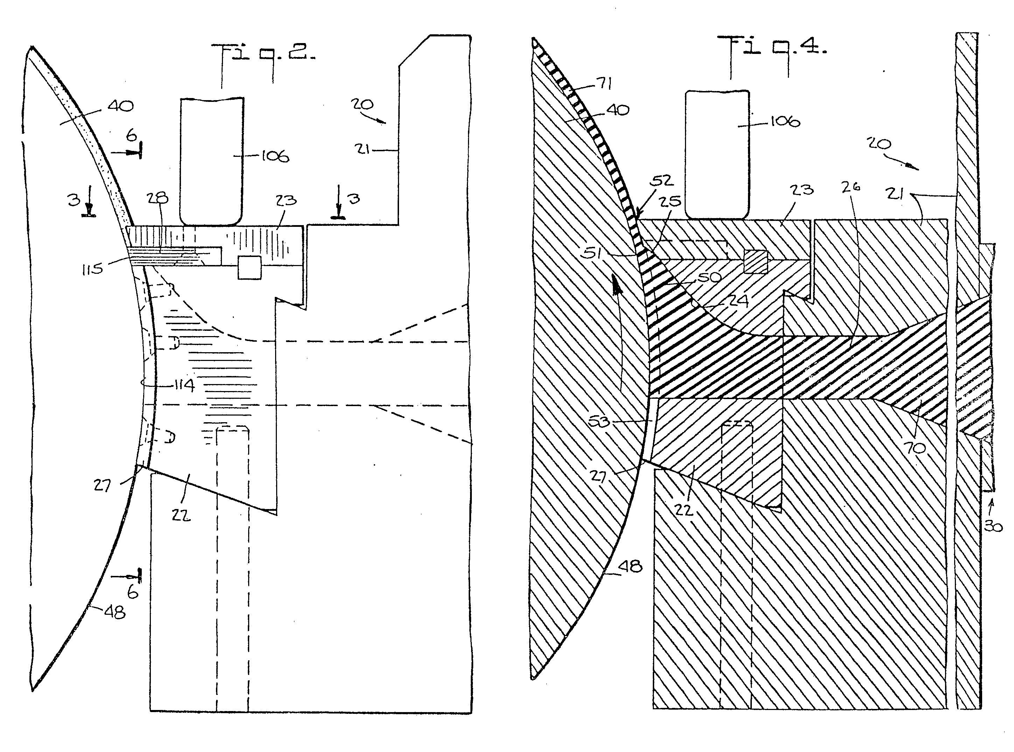

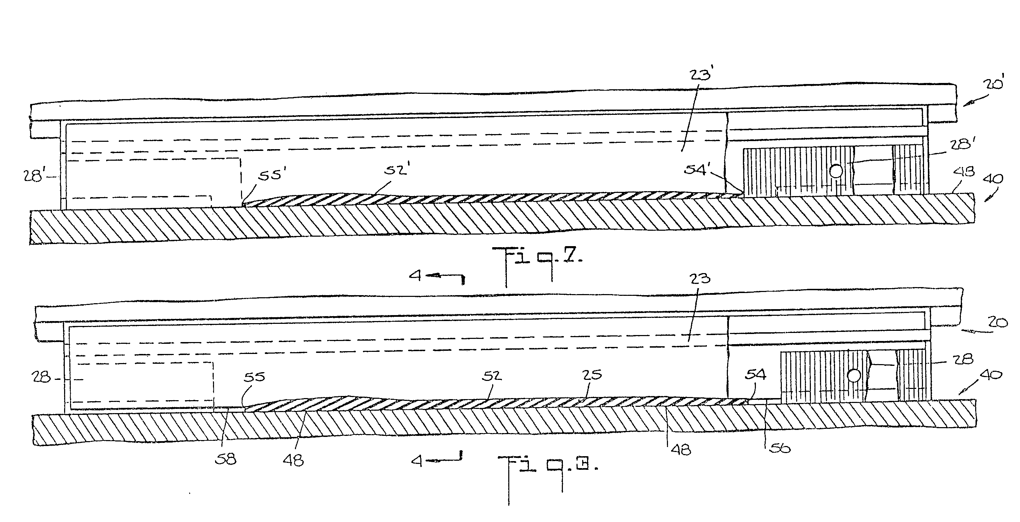

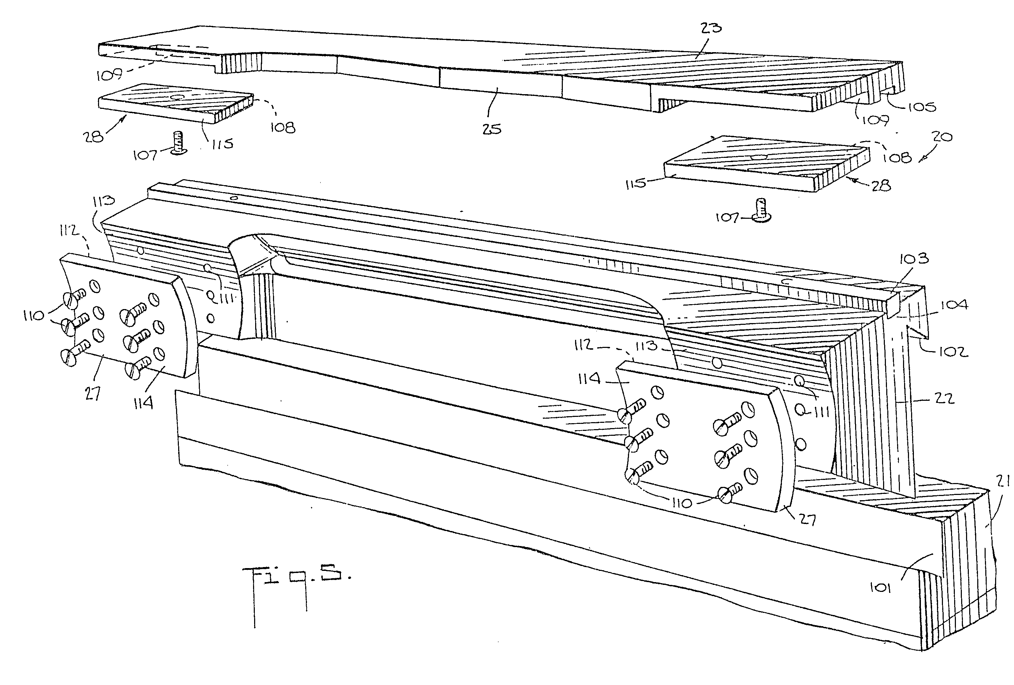

As shown in Figure 4, the roller 40 and die head 20 cooperatively define an extrudate chamber 50 between their confronting surfaces. Extrudate supply means 30 forces the extrudate 70, in a fluid condition, into the chamber 50 through a passageway 26 in die head 20. The rotation of roller 40 forces the extrudate 70 through the chamber and out through an orifice at the downstream end of the chamber where it is shaped into a continuous strip 71. The structure of the chamber and orifice will be described below. The strip 71 is carried downstream, away from die head 20, by the continued rotation of roller 40, and is then removed from the roller by conventional means, not shown.

The term "fluid" has been used to describe the condition of the extrudate in the chamber. This term should be understood to include any flowable condition. For example, an extrudate composed of rubber stock may be in a gummy condition, would be in a "fluid" condition. Of course, depending on the nature of the extrudate, the extrudate may have to be heated or cooled so that it will cure to a solid or semisolid condition by the time it is removed from the roller. This may be accomplished by heating or cooling the roller 40 and the die head 20 by conventional means well known to those skilled in the art.

As seen in sectional view in Figure 4, die head 20 includes a base element 21, an upstream element 22 and a downstream element 23. These elements are shown in exploded view in Figure 5. A surface 24 of upstream element 22 confronts roller 40 and cooperates with the arcuate surface 48 of roller 40 to define an upstream portion of the extrudate chamber 50. A surface 25 of downstream element 23 confronts roller 40 and cooperates with the arcuate surface 48 of roller 40 to define a downstream portion 51 of the extrudate chamber.

The extrudate 70 enters the chamber 50 from extrudate supply means 30 through a channel 26 in base element 21 of die head 20. This channel 26 extends into upstream element 22 and communicates with the extrudate chamber 50.

As shown in Figure 3, the confronting surface 25 of downstream element 23 cooperates with the surface 48 of roller 40 to define an extrudate shaping orifice 52 at downstream end of the downstream portion 51 (Figure 4) of the extrudate chamber. As the extrudate 70 moves through the extrudate chamber and the orifice 52, it is shaped to a cross-section substantially corresponding to the shape of the orifice. The roller-confronting surface 25 of downstream element 23 of die head 20 is shaped so that it will define an orifice 52 of the desired shape in cooperation with the surface 48 of the roller.

As shown in Figure 4, the roller confronting surfaces 24 and 25 of die head elements 22 and 23 preferably are also shaped so that they converge with the surface 48 of roller 40 in the downstream direction. This convergence helps to pressurize the extrudate as it is forced downstream by roller 40 towards the orifice 52. A sufficient extrudate pressure at the orifice is desirable because it helps to prevent voids in the finished product.

There is a gap 53 between the upstream die head element 22 and the surface 48 of roller 40 upstream of the extrudate chamber 50. Because the rotation of roller 40 forces the extrudate downstream, away from the gap, the extrudate does not flow out through this gap.

As shown in Figure 2, bearing pads 27 and 28 are interposed between the roller 40 and the die head 20. In particular, upstream bearing pads 27 are affixed to the upstream element 22 of die head 20, while downstream bearing pads 28 are affixed to the downstream element 23 of die head 20.

As shown in Figures 5 and 6, two downstream bearing pads 28 and two upstream bearing pads 27 are provided, forming two sets of bearing pads. The sets of bearing pads are axially spaced apart, one on each side of the extrudate chamber 50 and 51 (Figure 6).

The roller 40 is forced against the bearing pads 27 and 28 (Figure 2) by jackscrews 45 (Figure 1). The force exerted by the biasing means or jackscrews 45 on the roller 40 to bias it against bearing pads 27 and 28 is at least equal to the force exerted by the extrudate pressure in the chamber which tends to force roller 40 away from the die head 20 and thus away from bearing pads 27 and 28.

Therefore, roller 40 will always bear against bearing pads 27 and 28 throughout the operation of the apparatus despite the presence of extrudate pressure in the chamber. As the roller, the bearing pads and the die head are quite rigid, the bearing pads will accurately position the roller 40 with respect to the die head, and will accurately maintain the clearance between the surface 48 of the roller and the surface 25 of element 23 of the die head 70 which forms part of the extrudate shaping orifice 52 (Figure 3). Thus, the size of the extrudate shaping orifice 52 will be accurately maintained during operation of the apparatus and the thickness of the strip issuing from the apparatus can also be accurately maintained.

The placement of the bearing pads shown in Figures 1 through 6, axially spaced apart with bearing pads on both sides of the extrudate chamber, prevents misalignment of the roller with the die head which might be caused by unbalanced loading of the roller if the pads were placed on only one side of the extrudate chamber.

The particular placement of the bearing pads in the embodiment of Figures 1 through 6 also allows the use of the bearing pads in axially confining the extrudate within the extrudate chamber, in addition to their use in spacing the roller from the die head.

As seen in Figure 6, the upstream bearing pads 27 affixed to upstream element 22 of die head 20 lie immediately axially outboard of the upstream portion 50 of the extrudate chamber. Because the roller surface 48 of roller 40 bears on pads 27 during operation of the apparatus (Figure 2), there is no clearance between the pads and the roller during operation of the apparatus. Therefore, the extrudate cannot leak axially outward from the upstream portion of the extrudate chamber.

As set forth above, the extrudate is formed into the finished strip at the extrudate shaping orifice 52 which is defined by the surface 25 of the downstream roller die head element 23 and the surface 48 of roller 40 (Figure 3). The lateral edges of the finished strip are formed at the axially spaced lateral boundaries 54 and 55 of this orifice. In the embodiment shown in Figures 1 through 6, the downstream bearing pads 28 are positioned axially outboard of the boundaries 54 and 55 and remote from these boundaries. Because the downstream element 23 of die head 20 is spaced from the surface 48 of roller 40 over its entire axial extent, there are additional gaps 56 and 58 lying between the lateral boundaries 54 and 55 of the extrudate shaping orifice 52 and the downstream bearing pads 28. Some extrudate will flow out from the extrudate chamber through these gaps 56 and 58 and form a trim on the lateral edges of the finished strip. This trim is removed from the strip in a subsequent operation.

To control the amount of flash or trim on the finished strip, the configuration of the downstream bearing pads 28 and the downstream element 23 of die head 20 are chosen such that the gaps 56 and 58 have a thickness which is so small that the amount of material passing through the gaps is negligible. For example, in the extrusion of tire sidewall slabs, the gaps 56 and 58 are preferably no thicker than about .076 cm.

As set forth above, roller 40 bears against the bearing pads 27 and 28 (Figure 2) with substantial force. Because the bearing pads 27 and 28 are fixed to the stationary die head 20, the surface 48 of roller 40 must slide over the contacting surface 114 and 115 of pads 27 and 28 as roller 40 rotates. Therefore, the materials from which pads 27 and 28 are fabricated must be chosen to form a low friction bearing with the surface 48 of roller 40. This bearing must operate without galling or excessive wear even under the substantial contact pressures between the roller surface 48 and the pad surfaces 114 and 115 which are encountered in operation of the apparatus.

To prevent galling, the bearing pads 27 and 28 should be fabricated from a material with a hardness which differs from that of the roller. Since the bearing pads can be readily replaced as described below, it is preferable to fabricate the bearing pads from material which is softer than the material of the roller surface 48 so that the surfaces 114 and 115 of pads 27 and 28 will wear and the roller surface 48 will be preserved.

The bearing formed by the roller and the pads should preferably be capable of operation without any external lubrication. If external lubricants such as oil were applied to either the roller surface or the bearing pads, they might contaminate the extrudate stream and thus contaminate the finished strip.

The bearing must also be capable of operation at the die head temperature employed in operation of the apparatus. Of course, the required die head temperature will vary with the material to be extruded and thus the heat resistance requirements for the bearing pads will also vary with the material to be extruded.

For use in the extrusion of natural rubber, the preferred material for the bearing pads is a composition of nylon 6/6 and molybdenum disulfide sold under the registered trademark Nylatron GS by the Polymer Corporation, Reading, Pennsylvania, U.S.A. Another suitable pad material is a filled polytetrafluoroethylene composition sold under the registered trademark Turcite by the W. S. Shamban Co. Los Angeles, California U.S.A.

The roller 40 is preferably fabricated from a hard, metallic material such as steel or iron. The preferred structure and assembly of die head 20 is shown in exploded view in Figure 5. Die head base element 21 is provided with a generally V-shaped notch 101. Upstream element 22 is provided with a mating, generally V-shaped tongue 102 which seats in notch 101. A conventional key 103 is seated in an axially extending keyway 104 in the downstream surface of upstream element 22. A similar axially extending keyway 105 is provided in the upstream surface of downstream element 23 to engage the projecting portion of key 103 and align the downstream element 23 with the upstream element 22.

In the operating condition of the die head, the downstream element 24 is forced against upstream element 22 by a force applying means such as a fluid cylinder (not shown) acting through a push rod 106 (Figure 4). Thus, upstream element 22 is also forced against base element 21 so that elements 23, 22 and 21 are locked firmly together.

The downstream bearing pads 28 are affixed to the downstream confronting element 23 by screws 107, which engage threaded holes (not shown) in downstream element 23. Of course, to allow downstream element 23 to seat closely against upstream element 22, the heads of screws of 107 are countersunk into the bearing pads 28.

The surfaces 108 of bearing pads 28 which will face away from the roller 40 in the operating condition of the assembly are arranged to seat against corresponding supporting surfaces 109 of downstream element 23.

The upstream bearing pads 27 are fastened to upstream element 22 by screws 110 engaging threaded holes 111 in element 22. The back surface 112 of each of the bearing pads 27 seats on the corresponding surface 113 of element 22. The screws 110 help restrain the pads 27 on surface 113 against the wiping or frictional forces generated by the roller during operation of the apparatus. To prevent damage to the roller, the heads of screws of 110 are countersunk into pads 27.

To assure an accurate fit of the pads 27 against the arcuate surface 48 of roller 40 (Figure 2) the surfaces 114 of pads 27 which contact the roller surface are contoured to a radius matching that of roller surface 48. Because, in the embodiment shown, the arcuate extent of contact between the pads 28 and the roller 40 is fairly small, the surfaces 115 of pads 28 which contact roller surface 48 may be fabricated as flat surfaces. Over the small arcuate extent of the mutual contact between surfaces 115 and 48, the deviation between the straight surfaces 115 and the curved surface 48 of roller 40 is negligible.

The construction of the die head as described above allows the apparatus to be readily dismantled for maintenance. When the force applied by push rod 106 (Figure 2) is relieved and the roller 40 is moved away from the die head by the jackscrews 45 (Figure 1), die elements 22 and 23 may be readily removed from base element 21. Once the die elements 22 and 23 have been removed from the apparatus, bearing pads 27 and 28 may be readily exchanged for new ones.

If it is desired to change the shape of the finished strip, downstream element 23 may be exchanged for a different downstream element, and the apparatus may be reassembled. Of course, the finished strip issuing from the apparatus after the reassembly will reflect the shape of the new downstream element. If major changes are to be made in the shape of the finished strip, it may also be desirable to replace upstream element 22 to preserve the desired flow pattern at the transition between the two confronting elements 22 and 23.

As described above, the strips formed by the apparatus shown in Figure 1 through 6 will normally have some trim along their lateral edges, which must be removed from the strip after forming. An apparatus according to an alternate embodiment, partially depicted in Figure 7, will form strips without this trim on the edges. The apparatus of this alternate embodiment is identical to the apparatus shown in Figure 1—6 except for the configuration of the downstream die element and the bearing pads associated therewith.

In the apparatus of this embodiment, as shown in Figure 7, the downstream bearing pads 28' are affixed to the downstream die element 23' and are axially spaced apart from one another. However, bearing pads 28 extend axially inward so that they define the axially spaced lateral boundaries 54' and 55' of the extrudate shaping orifice 52'. Because the surface 48 of roller 40 bears against the pads 28', no extrudate can pass between the pads 28' and the roller surface 48. Thus, the lateral edges of the strip issuing from the orifice will be formed without trim by contact of the extrudate with the bearing pads 28' at the boundaries 54' and 55' of the orifice 52'.

As will be readily appreciated, many variations and combinations of the features set forth above can be utilized.

By way of example only, the bearing pads need not be affixed to the die head. Rather, they may be formed as hoops of bearing material affixed to the roller at axially spaced locations. Although the sliding contact will then be between the hoops of bearing material (the bearing pads) and the die head rather than between the pads and the roller surface, the location of the roller with respect to the die head will still be maintained if the roller bears upon the die head through the pads or hoops.

Of course, a reinforcing fabric may be incorporated in the finished strip produced by the apparatus by feeding the fabric into the extrudate chamber of the apparatus through the upstream gap 53 (Figure 4) during operation of the apparatus.

## Claims

1. Extrusion apparatus comprising a generally cylindrical roller (40); a stationary die head (20) having a surface (24, 25) confronting said roller over a portion of the arcuate surface (48) thereof to define a chamber (50) between said die head and said roller; means (30) for supplying an extrudate in a fluid condition to said chamber; means (60, 61, 62, 63) for rotating said roller about its axis to force said extrudate in a downstream direction through said chamber so that at least the extrudate in a downstream portion (51) of said chamber is under pressure, a downstream portion of said confronting surface of said die head cooperating with the surface of said roller to define an extrudate shaping orifice (52) at the downstream end of said chamber; and means (45, 46, 47) for biasing said roller towards said die head, characterized in that a bearing pad (27, 28) is interposed between said roller and said die head, said bearing pad spacing said roller from said die head and accepting the reaction forces between said roller and said die head when said roller is biased towards said die head.

2. Extrusion apparatus as claimed in claim 1 characterised in that the material of a bearing surface (114, 115) of said bearing pad and of its confronting element are selected so that the mutually contacting surfaces thereof will form a bearing operable without the application of external lubrication.

3. Extrusion apparatus as claimed in claim 2 characterised in that at least two bearing pads (27, 28) are interposed between said roller (40) and said die head (20) and said pads are spaced axially from one another.

4. Extrusion apparatus as claimed in claim 3 characterised in that said bearing pads (27, 28) form the axially spaced lateral boundaries of at least a portion of said chamber (50).

5. Extrusion apparatus as claimed in claim 4 characterised in that said bearing pads (27, 28) additionally define the axially spaced lateral boundaries (54', 55') of said extrudate shaping orifice (52).

6. Extrusion apparatus as claimed in any one of claims 3 to 5 characterised in that said bearing pads (27, 28) are affixed, preferably in releasable manner, to said die head (20).

7. Extrusion apparatus as claimed in claim 6 characterised in that said roller (40) has a surface formed of material, for example metal, which is harder than the pad material, for example a composition of nylon 6/6 and molybdenum disulfide or a composition including polytetrafluoroethylene.

8. Extrusion apparatus as claimed in any one of the preceding claims characterised in that said apparatus includes a frame (10) and a bearing block (41) slidably mounted to said frame, said die head (20) is mounted to said frame (10) and said roller (40) is rotatably mounted to said bearing block, and said means for biasing said roller towards said die head includes means (45, 46, 47) for biasing said bearing block towards said die head.

9. Extrusion apparatus as claimed in claim 8 characterised in that said die head (20) includes a base element (21) mounted to said frame, an upstream element (22) releasably mounted to said base element and a downstream element (23) releasably mounted to said upstream element, an upstream portion of said chamber (50) is defined by a surface (24) of said upstream element confronting said roller (40) and said extrudate shaping orifice (52) is defined by a surface (25) of said downstream element confronting said roller.

10. Extrusion apparatus as claimed in claim 9, insofar as dependent on claim 3, characterised in that said bearing pads (27, 28) include two upstream bearing pads (27) which are affixed to said upstream element (22) and two downstream bearing pads (28) which are affixed to said downstream element (23) so that said upstream and downstream bearing pads constitute two sets of bearing pads spaced axially from each other and lying axially outboard of said chamber on both sides thereof.

11. Extrusion apparatus as claimed in claim 10, characterised in that said downstream bearing pads (28') define the axially spaced lateral boundaries (54', 55') of said extrudate shaping orifice (52), and said upstream bearing pads (27) define the axially spaced lateral boundaries of said upstream portion of said chamber (50).

12. A method of extruding a strip of extrudate including the steps of: feeding the extrudate in fluid condition into a chamber (50) defined by the arcuate surface (48) of a generally cylindrical roller (40) and a confronting surface (24, 25) of a die head; moving the extrudate in a downstream direction through the chamber to force the extrudate through an extrudate shaping orifice (52) defined by the roller and a portion (25) of the confronting surface of the die head at the downstream end of the chamber, and, during such movement biasing the roller towards the die head; characterised in that the roller is rotated about its axis to carry the extrudate in the downstream direction, reaction forces resulting from the biasing of the roller towards the die head are accepted by bearing pads (27, 28) interposed between the roller and the die head and axially spaced from one another, the pads defining axially spaced lateral boundaries of at least a portion of the chamber, and the extrudate is axially confined in said portion (25) of the chamber (50) by means of the bearing pads (27).

13. A method as claimed in claim 12 characterised in that two of said bearing pads (28') are used to act as downstream bearing pads and are interposed between said roller and the downstream portion of said die head and are spaced axially from one another so that they define the axially spaced lateral boundaries (54', 55') of said extrudate shaping orifice, and the method further comprises the step of using a further two, of said biasing pads (27) to act as upstream bearing pads interposed between said roller and an upstream portion of said die head and spaced from one another to define spaced lateral boundaries of said chamber (50).

## Revendications

1. Appareil d'extrusion comprenant un rouleau généralement cylindrique (40); une tête de filière stationnaire (20) ayant une surface (24, 25) faisant face audit rouleau sur une partie de sa surface arquée (48) pour définir une chambre (50) entre ladite tête de filière et ledit rouleau; un moyen (30) pour amener un extrudat en condition fluide à ladite chambre; un moyen (60, 61, 62, 63) pour faire tourner ledit rouleau autour de son axe pour forcer ledit extrudat en direction vers l'aval à travers ladite chambre afin qu'au moins l'extrudat dans une partie en aval (51) de ladite chambre soit sous pression, une partie en aval de ladite surface de front de ladite tête de filière coopérant avec la surface dudit rouleau pour définir un orifice de mise en forme de l'extrudat (52) à l'extrémité en aval de ladite chambre; et un moyen (45, 46, 47) pour solliciter ledit rouleau vers ladite tête de filière, caractérisé en ce qu'un patin (27, 28) est interposé entre ledit rouleau et ladite tête de filière, ledit patin espaçant ledit rouleau de ladite tête de filière et recevant les forces de réaction entre ledit rouleau et ladite tête de filière quand ledit rouleau est sollicité vers ladite tête de filière.

2. Appareil d'extrusion selon la revendication 1, caractérisé en ce que les matériaux d'une surface d'appui (114, 115) dudit patin et de son élément lui faisant face sont choisis de façon que leurs surfaces mutuellement en contact forment un palier pouvant fonctionner sans application d'une lubrification externe.

3. Appareil d'extrusion selon la revendication 2, caractérisé en ce qu'au moins deux patins (27, 28) sont interposés entre ledit rouleau (40) et ladite tête de filière (20) et lesdits patins sont espacés axialement l'un de l'autre.

4. Appareil d'extrusion selon la revendication 3, caractérisé en ce que les patins (27, 28) forment les limites latérales axialement espacées d'au moins une partie de ladite chambre (50).

5. Appareil d'extrusion selon la revendication 4, caractérisé en ce que lesdits patins (27, 28) définissent de plus les limites latérales axialement espacées (54', 55') dudit orifice de mise en forme de l'extrudat (52).

6. Appareil d'extrusion selon l'une quelconque des revendications 3 à 5, caractérisé en ce que lesdits patins (27, 28) sont fixés, de préférence de façon amovible, à ladit tête de filière (20).

7. Appareil d'extrusion selon la revendication 6, caractérisé en ce que le rouleau (40) a une surface qui est formée en un matériau, par exemple du métal, qui est plus dur que le matériau du patin, par exemple une composition de nylon 6/6 et de disulfure de molybdène ou une composition contenant du polytétrafluoroéthylène.

8. Appareil d'extrusion selon l'une quelconque des revendications précédentes, caractérisé en ce que ledit appareil comprend un châssis (10) et un bloc palier (41) monté coulissant sur ledit châssis, ladite tête de filière (20) est montée sur ledit châssis (10) et ledit rouleau (40) est monté rotatif sur ledit bloc palier, et ledit moyen pour solliciter ledit rouleau vers ladite tête de filière comprend un moyen (45, 46, 47) pour solliciter ledit bloc palier vers ladite tête de filière.

9. Appareil d'extrusion selon la revendication 8, caractérisé en ce que ladite tête de filière (20) comprend un élément de base (21) monté sur ledit châssis, un élément en amont (22) monté amovible sur ledit élément de base et un élément en aval (23) monté amovible sur ledit élément en amont, une partie en amont de ladite chambre (50) est définie par une surface (24) de l'élément en amont faisant face au rouleau (40) et l'orifice de mise en forme de l'extrudat (52) est défini par une surface (25) de l'élément en aval faisant face audit rouleau.

10. Appareil d'extrusion selon la revendication 9, pour autant qu'elle dépende de la revendication 3, caractérisé en ce que lesdits patins (27, 28) comprennent deux patins en amont (27) qui sont fixés audit élément en amont (22) et deux patins en aval (28) qui sont fixéx audit élément en aval (23), ainsi lesdits patins en amont et en aval constituent deux groupes de patins qui sont axialement espacés et qui se trouvent axialement vers l'extérieur de ladite chambre sur ses deux côtés.

11. Appareil d'extrusion selon la revendication 10, caractérisé en ce que lesdits patins en aval (28') définissent les limites latérales axialement espacées (54', 55') dudit orifice de mise en forme de l'extrudat (52) et en ce que lesdits patins en amont (27) définissent les limites latérales axialement espacées de la partie en amont de ladit chambre (50).

12. Procédé d'extrusion d'une bande d'extrudat, caractérisé en ce qu'il comprend les étapes de: amener l'extrudat en condition fluide dans une chambre (50) définie par la surface arquée (48) d'un rouleau généralement cylindrique (40) et une surface en vis-à-vis (24, 25) d'une tête de filière; déplacer l'extrudat en direction vers l'aval à travers la chambre pour forcer l'extrudat à travers un orifice de mise en forme de l'extrudat (52) défini par le rouleau et une partie (25) de la surface en vis-à-vis de la tête de filière à l'extrémité de la chambre située en aval et, pendant ce mouvement, solliciter le rouleau vers la tête de filière; caractérisé en ce que le rouleau est entraîné en rotation autour de son axe pour entraîner l'extrudat en direction vers l'aval, les forces de réaction résultant de la sollicitation du rouleau vers la tête de filière sont supportées par des patins (27, 28) interposés entre le rouleau et la tête de filière et axialement espacés l'un de l'autre, les patins définissant les limites latérales axialement espacées d'au moins une partie de la chambre, et l'extrudat est axialement confiné dans la partie (25) de la chambre (50) au moyen des patins (27).

13. Procédé selon la revendication 12, caractérisé en ce que deux desdits patins (28') sont utilisés pour agir comme patins situés en aval et sont interposés entre ledit rouleau et la partie en aval de ladite tête de filière et sont axialement espacés l'une de l'autre afin qu'ils définissent les limites latérales axialement espacées (54', 55') de l'orifice de mise en forme de l'extrudat et en ce que le procédé comprend de plus l'étape d'utiliser deux autres patins (27) devant agir comme patins en amont interposés entre ledit rouleau et une partie en amont de ladite tête de filière, et espacés l'un de l'autre pour définir les limites latérales et espacées de ladite chambre (50).

**Patentansprüche**

1. Strangpreßvorrichtung, die eine im allgemeinen zylindrische Walz (40), einen feststehenden oder ortsfesten Düsenkopf (20) mit einer Oberfläche (24, 25), die einem Bereich der gekrümmten Oberfläche (48) der Walze so gegenübersteht, daß zwischen dem Düsenkopf und der Walze eine Kammer (50) festgelegt wird, eine Einrichtung (30), die dazu dient, der Kammer ein Strangpreßmaterial zuzuführen, das sich in einem flüssigen oder fließfähigen Zustand benfindet, Einrichtungen (60, 61, 62, 63), die dazu dienen, die Walze um ihre Achse herum zu drehen, um das Strangpreßmaterial so in Richtung der Strömung durch die Kammer hindurchzudrücken, daß mindestens das Strangpreßmaterial, das in dem stromab befindlichen Bereich (51) der Kammer vorliegt, unter Druck steht, wobei ein stromab befindlicher Bereich der der Walze gegenüberstehenden Oberfläche des Düsenkopfes in der Weise mit der Oberfläche der Walze zusammenwirkt, daß am stromab befindlichen Ende der Kammer eine zur Formung des Strangpreßmaterials dienende Düsenöffnung (52) festgelegt wird, und Einrichtungen (45, 46, 47), die zum Vorspannen der Walze in Richtung auf den Düsenkopf dienen, aufweist, dadurch gekennzeichnet, daß zwischen die Walze und den Düsenkopf eine Lagerplatte (27, 28) eingefügt oder dazwischengesetzt ist, wobei die Lagerplatte die Walze im Abstand von dem Düsenkopf hält und die Reaktionskrüfte oder Auflagerreaktionen aufnimmt, die zwischen der Walze und dem Düsenkopf auftreten, wenn die Walze in Richtung auf den Düsenkopf vorgespannt ist.

2. Strangpreßvorrichtung nach Anspruch 1, dadurch gekennzeichnet, daß das Material einer Lageroberfläche (114, 115) der Lagerplatte und das Material des der Lagerplatte gegenüberstehenden Elements so ausgewählt werden, daß die miteinander in Berührung kommenden Oberflächen der Lagerplatee und des der Lagerplatte gegenüberstehenden Elements ein Lager bilden, das ohne Anwendung von Außenschmierung betriebsfähig ist.

3. Strangpreßvorrichtung nach Anspruch 2, dadurch gekennzeichnet, daß zwischen die Walze (40) und den Düsenkopf (20) mindestens zwei Lagerplatten (27, 28) eingefügt sind und daß die Lagerplatten im Axialabstand voneinander angeordnet sind.

4. Strangpreßvorrichtung nach Anspruch 3, dadurch gekennzeichnet, daß die Lagerplatten (27, 28) die im Axialabstand angeordneten, seitlichen Ränder oder Begrenzungen mindestens eines Bereichs der Kammer (50) bilden.

5. Strangpreßvorrichtung nach Anspruch 4, dadurch gekennzeichnet, daß die Lagerplatten (27, 28) zusätzlich die im Axialabstand angeordneten, seitlichen Ränder oder Begrenzungen (54', 55') der das Strangpreßmaterial formenden Düsenöffnung (52) festlegen.

6. Strangpreßvorrichtung nach einem der Ansprüche 3 bis 5, dadurch gekennzeichnet, daß die Lagerplatten (27, 28)—vorzugsweise in lösbarer Weise—an dem Düsenkopf (20) befestigt sind.

7. Strangpreßvorrichtung nach Anspruch 6, dadurch gekennzeichnet, daß die Walze (40) eine Oberfläche hat, die aus einem Material, beispielsweise aus Metall, gebildét est, das härter als das Material der Lagerplatte ist, bei dem es sich beispielsweise um eine Masse aus PA 6.6 und Molybdändisulfid oder eine Polytetrafluoräthylen enthaltende Masse handelt.

8. Strangpreßvorrichtung nach einem der vorhergehenden Ansprüche, dadurch gekennzeichnet, daß die Vorrichtung ein Gestell (10) und einen verschiebbar an dem Gestell angebrachten Lagerblock (41) aufweist, daß der Düsenkopf (20) an dem Gestell (10) angebracht ist, daß die Walze (40) drehbar an dem Lagerblock angebracht ist und daß die Einrichtungen, die zum Vorspannen der Walze in Richtung auf den Düsenkopf dienen, Einrichtungen (45, 46, 47) enthalten, die zum Vorspannen des Lagerblocks in Richtung auf den Düsenkopf dienen.

9. Strangpreßvorrichtung nach Anspruch 8, dadurch gekennzeichnet, daß der Düsenkopf (20) ein an dem Gestell angebrachtes Grundelement (21), ein lösbar an dem Grundelement angebrachtes, stromauf befindliches Element (22) und ein lösbar an dem stromauf befindlichen Element angebrachtes, stromab befindliches Element (23) enthält, daß ein stromauf befindlicher Bereich der Kammer (50) durch eine der Walze (40) gegenüberstehende Oberfläche (24) des stromauf befindlichen Elements festgelegt wird und daß die das Strangpreßmaterial formende Düsenöffnung (52) durch eine der Walze gegenüberstehende Oberfläche (25) des stromab befindlichen Elements festgelegt wird.

10. Strangpreßvorrichtung nach Anspruch 9, soweit sich dieser auf Anspruch 3 bezieht, dadurch gekennzeichnet, daß die Lagerplatten (27, 28) zwei an dem stromauf befindlichen Element (22) befestigte, stromauf befindliche Lagerplatten (27) und zwei an dem stromab befindlichen Element (23) befestigte, stromab befindliche Lagerplatten (28) enthalten, so daß die stromauf und die stromab befindlichen Lagerplatten zwei Sätze von im Axialabstand voneinander angeordneten Lagerplatten darstellen, die an beiden Seiten der Kammer axial außerhalb der Kammer liegen.

11. Strangpreßvorrichtung nach Anspruch 10, dadurch gekennzeichnet, daß die stromab befindlichen Lagerplatten (28') die im Axialabstand angeordneten, seitlichen Ränder oder Begrenzungen (54', 55') der das Strangpreßmaterial formenden Düsenöffnung (52) festlegen und daß die stromauf befindlichen Lagerplatten (27) die im Axialabstand angeordneten, seitlichen Ränder oder Begrenzungen des stromauf befindlichen Bereichs der Kammer (50) festlegen.

12. Verfahren zum Strangpressen eines Streifens aus einem Strangpreßmaterial mit den folgenden Schritten: Einfürung des Strangpreßmaterials in einem flüssigen oder fließfähigen Zustand in eine Kammer (50), die durch die gekrümmte Oberfläche (48) einer im allgemeinen zylindrischen Walze (40) und eine der Walze gegenüberstehende Oberfläche (24, 25) eines Düsenkopfes festgelegt wird, und Bewegen des Strangpreßmaterials durch die Kammer in Richtung der Strömung um das Strangpreßmaterial durch eine das Strangpreßmaterial formende Düsenöffnung (52), die durch die Walze und einen Bereich (25) der der Walze gegenüberstehenden Oberfläche des Düsenkopfes am stromab befindlichen Ende der Kammer festgelegt wird, hindurchzudrücken, wobei während dieser Bewegung die Walze in Richtung auf den Düsenkopf vorgespannt wird, dadurch gekennzeichnet, daß die Walze um ihre Achse herum gedreht wird, um das Strangpreßmaterial in Richtung der Strömung zu führen, wobei die Reaktionskräfte oder Auflagerreaktionen, die sich aus der Vorspannung der Walze in Richtung auf den Düsenkopf ergeben, durch Lagerplatten (27, 28), die zwischen die Walze und den Düsenkopf eingefügt oder dazwischengesetzt sind und im Axialabstand voneinander angeordnet sind, aufgenommen werden, wobei die Lagerplatten im Axialabstand angeordnete, seitliche Ränder oder Begrenzungen mindestens eines Bereichs der Kammer festlegen und wobei das Strangpreßmaterial in dem Bereich (25) der Kammer (50) mittels der Lagerplatten (27) axial begrenzt wird.

13. Verfahren nach Anspruch 12, dadurch gekennzeichnet, daß zwei der Lagerplatten (28') in der Weise angewendet werden, daß sie als stromab befindliche Lagerplatten dienen, die zwischen die Walze und den stromab befindlichen Bereich des Düsenkopfes eingefügt oder dazwischengesetzt sind und so im Axialabstand voneinander angeordnet sind, daß sie die im Axialabstand angeordneten, seitlichen Ränder oder Begrenzungen (54', 55') der das Strangpreßmaterial formenden Düsenöffnung festlegen, wobei das Verfahren einen weiteren Schritt enthält, der darin besteht, daß zwei weitere Vertreter der Lagerplatten (27) in der Weise angewendet werden, daß sie als stromauf befindliche Lagerplatten dienen, die zwischen die Walze und einen stromauf befindlichen Bereich des Düsenkopfes eingefügt oder dazwischengesetzt sind und so im Abstand voneinander angeordnet sind, daß sie im Abstand angeordnete, seitliche Ränder oder Begrenzungen der Kammer (50) festlegen.

Fig.1.

Fig.6.

Fig.2.

Fig.4.

0 005 077

23'

20'

28'

55' 52' 54' 48 40

28'

4

**Fig.7.**

23

20

28

55 52 25 54 28 40

58 48 48 56

4

**Fig.8.**

Fig.5.

0005077